Europäisches Patentamt

(19) European Patent Office

Office européen des brevets

(11) Publication number: **0 203 212**
**B1**

(12) **EUROPEAN PATENT SPECIFICATION**

(45) Date of publication of patent specification: **30.11.88**

(51) Int. Cl.⁴: **B 29 C 45/36,** B 29 C 33/30

(21) Application number: **85106537.5**

(22) Date of filing: **28.05.85**

(54) **Apparatus for maintaining uniform wall thickness in hollow molded plastic articles.**

(43) Date of publication of application:
**03.12.86 Bulletin 86/49**

(45) Publication of the grant of the patent:
**30.11.88 Bulletin 88/48**

(84) Designated Contracting States:
**AT BE CH DE FR GB IT LI LU NL SE**

(56) References cited:
**GB-A-1 390 634**
**US-A-4 520 991**

**KUNSTSTOFFE, vol. 74, no. 12, December 1984, page 723, Munich; "Zentriereinheit mit Prismenführung"**

(73) Proprietor: **Letica Corporation**
**1700 Hamlin Road**
**Rochester Michigan 48063 (US)**

(72) Inventor: **Letica, Ilija**
**2980 Davison Lake Road**
**Oxford Michigan 48051 (US)**

(74) Representative: **Schaumburg, Thoenes & Englaender**
**Mauerkircherstrasse 31 Postfach 86 07 48**
**D-8000 München 80 (DE)**

# Description

Introduction

This invention relates to injection molding apparatus and particularly to an apparatus which augments the normal strike surfaces of telescopic male and female elements to maintain a uniform wall thickness in hollow molded plastic articles which is injection molded through the use of said apparatus.

Background of the invention

Hollow articles such as industrial shipping containers for foods, paints, construction material and so forth are often injection molded in large presses having axially aligned sections or portions which are adapt for axial movement relative to one another and which open and close cyclically during the molding operations. The mold tooling which is mechanically carried by the press typically includes a male mold element having a core portion which defines the interior configuration of the article and a female mold element having a cavity which defines the exterior configuration of the molded article. The male and female mold elements are telescopically interfitting along the formentioned axis of press travel.

The male and female mold elements are typically machined or configured to provide cambered or tapering striking surfaces which are outboard of the surfaces forming the mold cavity and which are brought into mutual contact as the mold elements are closed upon one another. The proper alignment and fit of these mold elements and particularly the striking surfaces is of utmost importance in the success of the molding operation in that such fit determines the quantity of flash or overflow from the mold cavity and also the uniformity of the wall thickness of the article about the longitudinal axis.

Excess flash is, of course, to be avoided as it represents wasteful usage of plastic material and requires trimming. However it is not nearly so important in the quality of the molded article as is the maintenance of a uniform wall thickness around the longitudinal axis of the article. If the mold elements, as a result of usage, warpage, thermal expansion or improper installation or maintenance, shift laterally fron one another, the result is a progressive wearing of the striking surfaces and the ultimate seating of the two mold elements within one another in a axially misaligned condition such that the radial thickness of the mold cavity is greater on one side than the other. When filled, this results in an article in which the wall thickness on one side exceeds nominal or ideal thickness and the wall thickness on the diametrically opposite side is less than nominal or ideal thickness. The reduced wall thickness clearly reduces the structural strength of the container and may lead to rejection of the container during the inspection phase or a failure of the container in the field; both eventualities are undesirable GB—A—1 390 634 addresses itself to this problem by providing a multi-part locating ring on the tapered surface of one of the mold parts which may be radially adjusted to compensate for wear over time.

Brief summary of the invention

The subject invention comprises an apparatus for maintaining uniform thickness in hollow molded plastic articles such as open ended shipping containers which are manufactured in a male/female mold element combination having striking surfaces which provide nominal alignment. In general the invention comprises the addition of principal alignment apparatus which ensures the proper mating relationship between such striking surfaces said apparatus comprising a plurality of guide blocks mounted on one of the elements, preferably the female or cavity element, and a plurality of spaced apart wear plate sets seated in pockets or recesses in the other of said elements, the spacing and axial alignment of said guide blocks and wear plates relative to one another being such as to ensure absolute axial alignment of the mold elements relative to one another and the maintenance of a uniform wall thickness for the molded plastic article when measured about the longitudinal axis thereof.

Brief description of the drawing

Figure 1 is a perspective view of a mold apparatus embodying the invention and useful for the manufacture of open ended, cylindrical plastic containers;

Figure 2 is a sectional view of a portion of the mold apparatus of Figure 1 in the closed condition; and,

Figure 3 is a plan view of a guide block and wear plate combination as assembled into the apparatus of Figures 1 and 2.

Detailed description of the specific embodiment

Referring to the drawing, a mold apparatus embodying the invention is shown to comprise a male element 10 mounted in a press body 12 for axial movement therewith, and a female mold element 14 mounted in the stationary press section 16, the elements 10 and 14 having a common longitudinal axis of symmetry and relative motion as shown.

Male mold element 10 exhibits a large cylindrical or drum-like core 18 which typically tapers somewhat from left to right, the cylindrical surface 20 of which defines the interior configuration of a molded plastic article to be fabricated therefrom. Male mold element 10 further exhibits a tapering striking surface 22 which lies radially outboard of the article configuring surface 20 for purposes to be described.

Female mold element 14 exhibits a cavity or interior cylindrical surface 24 the function of which is to define the configuration of the exterior of the molded plastic article. Accordingly, surfaces 20 and 24 are spaced apart in the normal mold-closed relationship to provide a mold cavity of uniform wall thickness about the axis of symmetry.

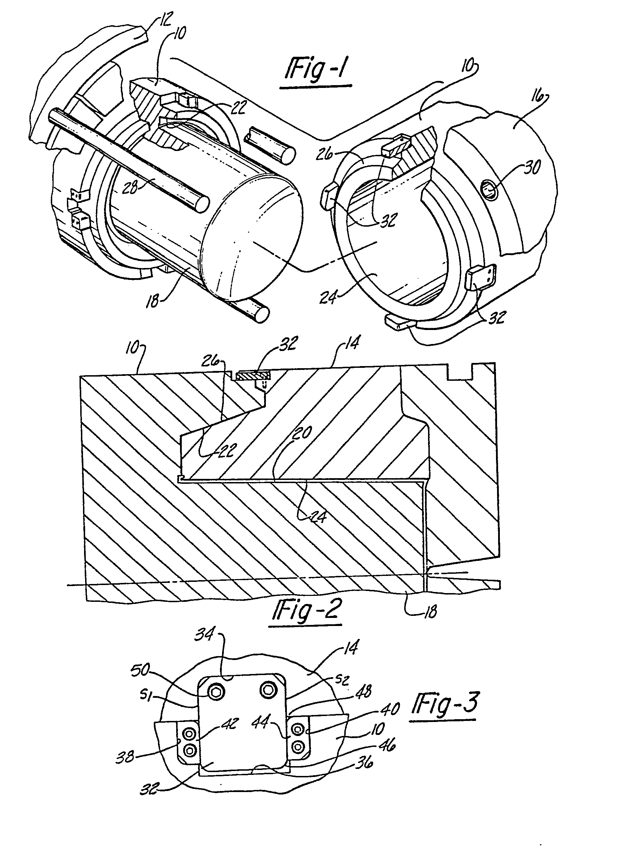

Female mold element 14 also exhibits a telescopic or tapering striking surface 26 which is adapted to mate with the striking surface 22 of the male mold element 10 when the press is closed as shown in Figure 2.

The mold apparatus is provided with alignment pins or rods 28 mounted on the movable portion 12 and cavities or sockets 30 on the stationary portion 16. Preferably the pins or rods 28 and the sockets 30 are arranged such that the mold apparatus comprising principal elements 10 and 14 will only go together; i.e., into the configuration shown in Figure 2, if the mold components are properly installed and properly aligned. In other words, the circumferential spacing between the pins or rods 28 is uneven such that any circumferential positioning error in the initial setup of the mold elements prevents the mold from closing and therefore is readily detected.

The striking surfaces 22 and 26, together with the alignment pins 28 and the sockets 30, telescope together to provide axial alignment of the mold elements 10 and 14 and, when the mold is new, are typically machined and configured so as to produce a mold cavity 20, 24 which is of uniform wall thickness when measured about the axis of symmetry. However, even slight misalignments which occur either on initial setup or afterward ultimately lead to imperfect contact between the surfaces 22 and 26. As the mold is opened and closed over hundreds or even thousands of mold cycles, misalignment tends to redefine the seating relationship of the striking surfaces 22, 26 and actually permits one of the mold elements to acquire a rest position which is shifted laterally relative to the other element; i.e., the two axes of symmetry are no longer absolutely coextensive. When this happens, the wall thickness on one side of the mold cavity becomes larger and the wall thickness on the diametrically opposite side becomes correspondingly thinner or smaller.

To prevent this from happening, female mold element 14 is provided with four evenly circumferentially spaced and axially extending guide blocks 32. The guide blocks are mounted in recesses or slots 34 which are formed in the outer cylindrical surface of the element 14; i.e., outboard of the striking surface 26. The guide blocks 32 are machined to precise tolerances, the most important of which is the width taken between the exeterior circumferentially opposite surfaces $S_1$ and $S_2$.

In addition, the male element 10 has formed therein a plurality of pockets 36 of generally rectangular configuration and having opposed interior recessed side surfaces 38 and 40. Wear plates 42 and 44 of hardened precision steel and of generally rectangular configuration are preceisely seated into the recessed portions of the pockets 36 to precisely receive the guide blocks 32 therebetween. Threaded fasteners such as machine screws 50 are preferably used to hold the guide blocks and the wear plates in position.

As best shown in Figure 3, the side recesses of the pockets 36 are shallower than the actual dimensions of the wear plates such that the interior opening dimension is defined by the mating surfaces of the wear plates and not by the dimensions of the pocket or the recesses themselves. The leading edges 46 of the guide blocks are radiused as are the receiving leading edges 48 of the wear plates to relieve stress and avoid breakage to slight misalignment.

Since there are four circumferentially uniformly spaced combinations of guide blocks and wear plates in the mold apparatus, the alignment of the mold elements 10 and 14 about all axes transverse to the longitudinal axis is ensured. This alignment is dictated by the hardened steel surfaces of the guide blocks and wear plates and their seating relationship with one another and is no longer dependent upon the relatively softer, less wear-resistant surfaces 22 and 26. Accordingly, the invention has been found to dramatically increase the life of the mold elements 10 and 14 by eliminating the initial misalignments which lead to friction and wear on the surfaces 22 and 26 and also to ensure over the usable lifetime of the mold the continuous production of articles having a uniform wall thickness when measured in a given plane about the longitudinal axis of symmetry thereof. Obviously the invention is not limited to the manufacture of articles having uniform wall thickness overall as in many cases it may be desirable, for example, to have a greater wall thickness in the bottom of the container than in the side walls or to have a somewhat thicker wall toward the bottom of the container relative to the top. None of these variations is foreclosed by the invention; the ultimate goal of the invention is to maintain whatever original wall thickness specifications are established and to prevent a radial shifting of the mold components which would lead to a reduction in wall thickness specification at one point on the container and a corresponding in wall thickness at a diametrically opposite location in the same perpendicular plane through the axis of symmetry. The guide blocks 32 and wear plates 42, 44 are preferably made of H13 steel hardened to Rockwell C scale 45 to 50.

**Claims**

1. A two part mold for producing a hollow molded plastic article such as an open-ended container, the mold including:

a male mold element having a first exterior portion defining the interior configuration of the article and second exterior portion defining a striking surface; and

a female mold element having a first interior portion defining the exterior configuration of the article and a second exterior portion defining a second striking surface;

said male and female elements being telescopically interfitting with one another along a common axis with said exterior and first interior portions in spaced apart relation to define a mold cavity for said article and with the first and second striking surfaces in mutual engagement;

said mold adaped to permit telescopic interfitting of said male and female mold elements in an axial alignment which produces a uniform radial thickness of said mold cavity about said axis and characterized in that it includes: a plurality of axially extending guide blocks mounted on one of said mold elements in circumferentially spaced relation adjacent the striking surface thereof;

a plurality of pockets formed in the other of said mold elements adjacent the striking surface thereof and in axial alignment with said guide blocks, each of said pockets having a pair of opposing, interior side surfaces; and

first and second reversely similar wear plates mounted within each of said pockets adjacent the opposing side surfaces thereof to define precise openings of a circumferential width closely conforming to the circumferential width of the guide blocks.

2. Apparatus as defined in claim 1 wherein each of said interior side surfaces includes a recessed portion, said wear plates being mounted into said recesses, the circumferential spacing between the wear plates being less than the circumferential spacing between said interior opposing side surfaces whereby the circumferential width of said openings is defined by said wear plate.

3. Apparatus as defined in Claim 1 wherein the guide blocks are essentially rectangular in configuration and have radiused leading edges, the wear blocks also having correspondingly radiused leading edges.

4. Apparatus as defined in Claim 1 wherein the guide blocks are mounted on said female mold portion and the wear plates are mounted on the male mold element.

**Patentansprüche**

1. Zweiteilige Form zur Herstellung eines hohlen geformten ten Kunstsoffartikels wie zum Beispiel eines offenen Behälters, wobei die Form enthält:

Ein positives Formelement mit einem ersten äußeren Abschnitt, der die innere Form des Artikels bestimmt, und mit einem zweiten äußeren Abschnitt, der eine Anlagefläche bildet und

ein negatives Formelement mit einem ersten inneren Abschnitt, der die äußere Form des Artikels bestimmt und einem zweiten äußeren Abschnitt, der eine zweite Anlagefläche bildet,

wobei das positive und das negative Element entlang einer gemeinsamen Achse teleskopartig ineinander greifen, um mit den in einem Abstand voneinander angeordneten äußeren und ersten inneren Abschnitten eine Hohlform für den Artikel zu bilden, sich die erste und die zweite Anlagefläche in gegenseitiger Anlage befinden,

und diese Form für eine teleskopisches axial fluchtendes Ineinandergrifen des positiven und negativen Formelements ausgebildet ist, wodurch eine Hohlform mit einer einheitlichen radialen Dicke un die genannte Achse gebildet wird, gekennzeichnet durch eine Mehrzahl axial verlaufender Führungsblöcke, die auf einem der Formelemente nahe dessen Anlagefläche mit gegenseitigem Abstand in Umfangrichtung angeordnet sind,

eine Mehrzahl taschenförmiger Aussparungen im anderen Formelement nahe dessen Anlagefläche, die axial mit den Führkngsblöcken fluchten, wobei jede der taschenförmigen Aussparungen ein Paar einander zugewandter innerer Seitenflächen aufweist, und

erste und zweite symmetrisch ähnliche Verschleißplatten, die in jeder der taschenförmigen Aussparungen nahe den einanderzugewandten Seitenflächen angeordnet sind, um präzise Öffnungen mit einer Umfangsweite zu bilden, die der Umfangsweite der Führungsblöcke angepaßt ist.

2. Vorrichtung nach Anspruch 1, bei der jede der inneren Seitenflächen einen vertieften Abschnitt aufweist, in dem die Verschleißplatten jeweils befestigt sind, und daß der Abstand zwischen den Verschleißplatten in Umfangsrichtung geringer ist als der Abstand zwischen den inneren einander zugewandten Seitenflächen in Umfangsrichtung, wodurch die Breite der Öffnungen in Umfangsrichtung von der Verschleißplatte bestimmt ist.

3. Vorrichtung nach Anspruch 1, bei der die Führungsblöckke eine im wesentlichen rechtekkige Form und abgerundete Vorderkanten haben, und daß die Verschleißplatten dazu korrespondierende abgerundete Vorderkanten haben.

4. Vorrichtung nach Anspruch 1, bei der die Führungsblöcke an dem negativen Formelement und die Verschleißplatten an dem positiven Formelement befestigt sind.

**Revendications**

1. Moule en deux parties pour la fabrication d'un article creux en matière plastique moulée tel qu'un conteneur ouvert à aux extrémités, le moule comprenant:

un élément mâle de moule ayant une première partie extérieure définissant la configuration intérieure de l'article et une seconde partie extérieure définissant une surface de portée;

et un élément femelle de moule ayant une première partie intérieure définissant la configuration extérieure de l'article et une seconde partie extérieure définissant une seconde surface de portée;

lesdits éléments mâle et femelle étant ajustés mutuellement télescopiquement l'un avec l'autre le long d'un axe commun avec ladite partie extérieure et ladite première partie intérieure en état d'espacement pour définir une cavité de moulage pour ledit article et avec les première et seconde surfaces de portée en engagement mutuel;

ce moule étant adapté pour permettre un ajustement mutuel télescopique desdits éléments mâle et femelle de moule en alignement axial ce que produit une épaisseur radiale uniforme de la cavité de moulage autour dudit axe et caractérisé en ce qu'il comprend:

une pluralité de blocs de guidage s'étendant axialement montés sur l'un des éléments de moule au voisinage de la surface de portée de cet élément avec un espacement en sens circonférentiel;

une pluralité de logements formés dans l'autre des éléments de moule au voisinage de la surface de portée de cet élément et en alignement axial avec lesdits blocs de guidage, chacun des logements ayant une paire de surfaces latérales intérieures opposées; et des première et seconde plaques d'usure similaires par symétrie montées à l'intérieur de chacun des logements au voisinage des surfaces latérales opposées de ces dernières pour définir des ouvertures précises d'une largeur en sens circonférentiel se conformant étroitement à la largeur en sens circonférentiel des blocs de guidage.

2. Appareil tel que défini à la revendication 1 dans lequel chacune des surfaces latérales intérieures comprend une partie évidée, les plaques d'usure étant montées dans ces évidements, l'espacement en sens circonférentiel des plaques d'usure étant inférieur à l'espacement en sens circonférentiel des surfaces latérales intérieures opposées de sorte que la largeur en sens circonférentiel desdites ouvertures est définie par les plaques d'usure.

3. Appareil tel que défini à la revendication 1 dans lequel les blocs de guidage ont une configuration essentiellement rectangulaire et ont des bords avant arrondis, les plaques d'usure ayant aussi des bords avant correspondants arrondis.

4. Appareil tel que défini à la revendication 1 dans lequel les blocs de guidage sont montés sur la partie femelle du moule et des plaques d'usure sont montées sur la partie mâle du moule.

_Fig-1_

_Fig-2_

_Fig-3_

1